# EUROPÄISCHE PATENTANMELDUNG

(11) **EP 0 597 375 A1**
(43) Veröffentlichungstag der Anmeldung: **18.05.1994**
(21) Anmeldenummer: 93117810.7
(22) Anmeldetag: 03.11.1993
(51) Int. Cl.: C08J 9/12

(54) **Herstellung aufgeschäumter Kunststoffe**

(30) Priorität: 13.11.1992 AT 2244/92
(71) Anmelder: UNION INDUSTRIE COMPRIMIERTER GASE GMBH NFG. KG, A-1111 Wien (AT)
(72) Erfinder: Adler, Robert, A-2201 Gerasdorf (AT)
(74) Vertreter: Kasseckert, Rainer

(57) **Zusammenfassung**

Das Verfahren betrifft die Herstellung aufgeschäumter Kunststoffe, bei dem dem plastischen Kunststoff regelbar ein oder mehrere Treibmittel zugeführt werden, wobei ein inertes Treibmittel, wie Kohlendioxid, Stickstoff oder Argon verwendet wird und der das oder die Treibmittel enthaltende Kunststoff extrudiert wird. Erfindungsgemäß wird zunächst ein inertes Treibmittel unter Hochdruck mit einer Trägersubstanz vorgemischt, die einerseits für das inerte Treibmittel und andererseits im zu extrudierenden Kunststoff eine hohe Löslichkeit aufweist, und anschließend wird dieses Gemisch unter Hochdruck in den Kunststoff injiziert. Dadurch können erheblich größere Mengen an inertem Treibmittel in dem plastischen Kunststoff gelöst werden als bei Verfahren ohne Vormischung.

## Beschreibung

Die Erfindung betrifft ein Verfahren zur Herstellung aufgeschäumter Kunststoffe, bei dem dem plastischen Kunststoff regelbar ein oder mehrere Treibmittel zugeführt werden, wobei ein inertes Treibmittel, wie Kohlendioxid, Stickstoff oder Argon, verwendet wird, und der das oder die Treibmittel enthaltende Kunststoff extrudiert wird.

Bei derartigen Verfahren werden auch heute noch halogenierte Kohlenwasserstoffe ("Freon") als Hauptbestandteil des Treibmittels verwendet, obwohl deren umweltschädigende Wirkungen bekannt sind. Häufig werden zusätzlich inerte Gase, wie Kohlendioxid oder Stickstoff, und/oder Alkohole als Treibmittel dem Kunststoff zugesetzt, um den Anteil an halogenierten Kohlenwasserstoffen herabzusetzen.

Problematisch für den weitgehenden Ersatz von halogenierten Kohlenwasserstoffen als Treibmittel sind die oft sehr geringe Löslichkeit der Ersatzstoffe in vielen plastischen Kunststoffen, so daß Kunststoffschäume geringer Raumdichte kaum herzustellen sind, und die auftretenden Nachteile bei der Handhabung dieser Ersatzstoffe, wie Brennbarkeit, Gesundheitsrisiken, schlechte Dosierbarkeit etc.

Aufgabe vor liegender Erfindung ist die Entwicklung eines Verfahrens zur Herstellung aufgeschäumter Kunststoffe, wobei der Anteil des bisher üblichen Treibmittels "Freon" deutlich herabgesetzt werden soll und an seiner Statt in höherem Maße umweltfreundliche Ersatzstoffe als Treibmittel zur Anwendung kommen sollen, ohne Qualitätseinbußen am Fertigprodukt in Kauf nehmen zu müssen.

Diese Aufgabe wird erfindungsgemäß dadurch gelöst, daß zunächst ein inertes Treibmittel unter Hochdruck mit einer Trägersubstanz vorgemischt wird, die einerseits für das inerte Treibmittel und andererseits im zu extrudierenden Kunststoff eine hohe Löslichkeit aufweist, und anschließend dieses Gemisch unter Hochdruck in den Kunststoff injiziert wird.

Im Unterschied zu den bisherigen Versuchen, die halogenierten Kohlenwasserstoffe durch inerte Treibmittel teilweise zu ersetzen, indem man beide Komponenten voneinander getrennt in den plastifizierten Kunststoff einleitet, wird bei vorliegender Erfindung eine Vormischung der Komponenten unter Hochdruck vorgenommen. Insbesondere bei Kunststoffen, in denen sich das inerte Treibmittel nur sehr schlecht löst, läßt sich durch das erfindungsgemäße Verfahren überraschenderweise der Anteil von inertem Treibmittel zur insgesamt eingesetzten Treibmittelmenge auf das ca. 10-fache erhöhen.

Zu beachten ist dabei, daß erfindungsgemäß das inerte Treibmittel, wie Kohlendioxid, Stickstoff oder Argon, mit einem weiteren Treibmittel oder Treibmittelgemisch als Trägersubstanz vorgemischt werden muß, die eine hohe Löslichkeit für dieses inerte Treibmittel aufweist.

Mit einem 2-Komponenten-Mischer läßt sich dann unter Hochdruck das inerte Treibmittel in der Trägersubstanz lösen. Anschließend wird dieses Gemisch in den plastischen Kunststoff injiziert, wobei wiederum auf eine gute Löslichkeit, in erster Linie der Trägersubstanz, im Kunststoff zu achten ist. Mit diesem erfindungsgemäßen Verfahren ist es möglich, große Mengen eines inerten Treibmittels in den Kunststoff einzubringen, indem man das im Kunststoff schlechterlösliche inerte Treibmittel gleichsam in der Trägersubstanz "versteckt".

Als Trägersubstanzen können je nach inerten Treibmitteln organische Treibmittel wie Methanol, Diethyläther, Toluol, Methylacetat oder halogenierte Kohlenwasserstoffe oder ein Gemisch von den genannten Substanzen verwendet werden. Auch an Wasser ist zu denken, wenn die im Kunststoffschaum verbleibende Feuchtigkeit und deren Auswirkungen (beispielsweise schlechtere Isolierfähigkeit) für die geplante Anwendung unerheblich sind.

Bei der Herstellung von Polystyrol-Schaumstoffen mit dem erfindungsgemäßen Verfahren hat es sich als vorteilhaft erwiesen, als Trägerstubstanz einen halogenierten Kohlenwasserstoff wie Freon R 142 und als inertes Treibmittel Kohlendioxid zu verwenden. Der Anteil des Kohlendioxids in diesem Treibmittelgemisch kann auf 25 % gebracht werden. Dieser Anteil übersteigt deutlich den bisher üblichen, maximal erreichbaren Anteil von ca. 2 % CO₂ beim Schäumen von Polystyrol mit Freon.

Um den Freon-Anteil weiter herabzusetzen, kann als Trägersubstanz ein Gemisch von Freon R 142 mit Methanol verwendet werden. Der Freon-Anteil bestimmt hierbei im wesentlichen den Isolierwert des geschäumten Polystyrols.

Hohe CO₂-Anteile lassen sich auch in der Trägersubstanz Methanol oder Diethyläther erzielen. Der Kohlendioxidanteil liegt hier zwischen etwa 75 und 95 %.

Das zugesetzte CO₂ erhöht außerdem die Feinporigkeit des fertiggestellten Polystyrolschaumes.

Besteht die Trägersubstanz aus zwei Stoffen, wird vorteilhaft zur Ausführung des erfindungsgemäßen Verfahrens ein 3-Komponenten-Mischinjektor verwendet, wobei beispielsweise das Kohlendioxid mit einem Druck von bis zu ca. 600 bar in die Trägersubstanz eingespritzt und dort gebunden wird.

Geeignete Druckwerte, bei denen die Mischung von Kohlendioxid mit der Trägersubstanz stattfindet, liegen zwischen 250 und 600 bar. Gute Ergebnisse sind besonders in der Gegend von 300 bis 400 bar zu erzielen.

Vorteilhafterweise wird das Kohlendioxid bei Raumtemperatur mit der Trägersubstanz gemischt. Es liegt dann bei Hochdruck in flüssiger Phase vor. Bei Temperaturen um 30°C ist auf den Übergang der flüssigen in die überkritische Phase zu achten.

Allgemein ist empfehlenswert, das Gemisch aus inertem Treibmittel und der Trägersubstanz auf eine Temperatur oberhalb Raumtempertur und unterhalb Extrudertemperatur zu erwärmen. Zum einen ist dann der Temperatursprung beim Eintritt in das heiße Extruderinnere nicht so groß, zum anderen kann ein Bestandteil des Treibmittelgemisches in die überkritische Phase kommen, wodurch die Löslichkeitswerte erhöht werden.

Im folgenden soll ein Ausführungsbeispiel das erfindungsgemäße Verfahren näher erläutern:
Zur Herstellung geschäumter Polystyrolplatten als Isoliermaterial wird erfindungsgemäß ein Treibmittelgemisch in den das geschmolzene Kunststoffgranulat enthaltenden Extruder eingespritzt. Dieses Treibmittelgemisch enthält Freon R 142 und Kohlendioxid, wobei der CO₂-Anteil zwischen 20 und 25 % liegt. Das Kohlendioxid wird einer Tankanlage entnommen und bei Raumtemperatur zusammen mit und getrennt von dem Freon durch eine Hochdruckpumpe geleitet. In einem Mischinjektor werden beide Komponenten bei Drücken zwischen 250 und 400 bar gemischt. Anschließend wird dieses Treibmittelgemisch auf dem Weg zum Extruder erwärmt und in den zu extrudierenden Kunststoff, der Temperaturen zwischen 220 und 250°C besitzt, eingedüst. Die extrudierten Polystyrolplatten sind feinporig mit niedrigem Raumgewicht und guter Isolierfähigkeit. Der CO₂-Anteil im Treibmittelgemisch liegt in einer bisher unerreichten Höhe.

## Patentansprüche

1. Verfahren zur Herstellung aufgeschäumter Kunststoffe, bei dem dem plastischen Kunststoff regelbar ein oder mehrere Treibmittel zugeführt werden, wobei ein inertes Treibmittel, wie Kohlendioxid, Stickstoff oder Argon verwendet wird und der das oder die Treibmittel enthaltende Kunststoff extrudiert wird, **dadurch gekennzeichnet**, daß zunächst ein inertes Treibmittel unter Hochdruck mit einer Trägersubstanz vorgemischt wird, die einerseits für das inerte Treibmittel und andererseits im zu extrudierenden Kunststoff eine hohe Löslichkeit aufweist, und anschließend dieses Gemisch unter Hochdruck in den Kunststoff injiziert wird.

2. Verfahren nach Anspruch 1, dadurch gekennzeichnet, daß als Trägersubstanz organische Treibmittel wie Methanol, Diethyläther, Toluol, Methylacetat oder halogenierte Kohlenwasserstoffe oder ein Gemisch von diesen verwendet wird.

3. Verfahren nach den Ansprüchen 1 oder 2, dadurch gekennzeichnet, daß als Trägersubstanz Wasser oder ein Gemisch von Wasser mit einem organischen Treibmittel verwendet wird.

4. Verfahren nach einem der Ansprüche 1 bis 3, dadurch gekennzeichnet, daß als inertes Treibmittel Kohlendioxid und als Trägersubstanz ein halogenierter Kohlenwasserstoff verwendet werden.

5. Verfahren nach einem der Ansprüche 1 bis 3, dadurch gekennzeichnet, daß als inertes Treibmittel Kohlendioxid und als Trägersubstanz ein Gemisch aus Methanol und einem halogenierten Kohlenwasserstoff verwendet werden.

6. Verfahren nach einem der Ansprüche 1 bis 3, dadurch gekennzeichnet, daß als inertes Treibmittel Kohlendioxid und als Trägersubstanz Methanol und/oder Diethyläther verwendet werden.

7. Verfahren nach einem der Ansprüche 1 bis 6, dadurch gekennzeichnet, daß als inertes Treibmittel Kohlendioxid mit einem Druck von 250 bis 600 bar, vorzugsweise von 300 bis 400 bar, mit der Trägersubstanz gemischt wird.

8. Verfahren nach Anspruch 7, dadurch gekennzeichnet, daß das inerte Treibmittel Kohlendioxid bei Raumtemperatur oder einer darüberliegenden Temperatur mit der Trägersubstanz gemischt wird.

9. Verfahren nach einem der Ansprüche 1 bis 8, dadurch gekennzeichnet, daß das Gemisch aus inertem Treibmittel und der Trägersubstanz auf eine Temperatur oberhalb Raumtempertur und unterhalb Extrudertemperatur erwärmt wird.
